## Europäisches Patentamt
## European Patent Office
## Office européen des brevets

(11) Veröffentlichungsnummer: **0 009 592**
**B1**

(12) **EUROPÄISCHE PATENTSCHRIFT**

(45) Veröffentlichungstag der Patentschrift:
22.07.81

(51) Int. Cl.³: **H 04 B 3/46**, H 04 L 1/24

(21) Anmeldenummer: **79103055.4**

(22) Anmeldetag. **20.08.79**

(54) Verfahren und Schaltungsanordnung zur Prüfung einer Nachrichtenstation.

(30) Priorität: 13.09.78 DE 2839875

(43) Veröffentlichungstag der Anmeldung:
16.04.80 Patentblatt 80/8

(45) Bekanntmachung des Hinweises auf die Patenterteilung:
22.07.81 Patentblatt 81/29

(84) Benannte Vertragsstaaten:
AT BE CH IT NL SE

(56) Entgegenhaltungen:
**IEEE CONFERENCE RECORD, 1976,
National Telecommunications Conference,
Vol. I, 29. und 30. November und 1. Dezember 1976,
Seiten 8.4-1 — 8.4-6
Dallas, Texas H.C. VAN DEN ELZEN et al.:
»Echo Cancellation in a 2-wire Full-Duplex Data
Transmission System with Bipolar Encoding«**

(73) Patentinhaber: **SIEMENS AKTIENGESELLSCHAFT** Berlin
und München, Postfach 22 02 61, D-8000 München 22 (DE)

(72) Erfinder: **Haass, Adolf, Eichelhäherstrasse 54,
D-8000 München 60 (DE)**

Anmerkung. Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebuhr entrichtet worden ist (Art. 99(1) Europäisches Patentübereinkommen).

BUNDESDRUCKEREI BERLIN

## Verfahren und Schaltungsanordnung zur Prüfung einer Nachrichtenstation

Die Erfindung bezieht sich auf ein Verfahren zur Prüfung einer Nachrichtenstation, die wahlweise in einen Prüfzustand oder in einen Betriebszustand versetzbar ist, wonach im Betriebszustand eine Nachricht im Duplex-Betrieb über eine Zweidraht-Leitung einer anderen Nachrichtenstation zugleitet wird, wonach ein nachgebildetes Signal gewonnen, mit dem empfangenen Signal verglichen und so ein Vergleichssignal gewonnen und dem Empfänger zugeführt wird, und wonach das Vergleichssignal mit einem konstanten Referenzsignal verglichen und so ein Regelsignal gewonnen wird, mit dessen Hilfe das nachgebildete Signal automatisch derart eingestellt wird, daß sich die gesendete Nachricht nicht störend auswirkt im Empfänger der eigenen Nachrichtenstation.

Die Überprüfung einer Nachrichtenstation — beispielsweise durch Einlegen einer Prüfschleife im Bereich dieser Nachrichtenstation — ist speziell dann sinnvoll, wenn möglichst viele Bestandteile dieser Nachrichtenstation geprüft werden. Je größer der Anteil jener Teile der Nachrichtenstation ist, die bei der Prüfung nicht erfaßt werden, desto größer ist die Wahrscheinlichkeit, daß ein Defekt nicht erkannt wird.

Der Erfindung liegt die Aufgabe zugrunde, ein Verfahren anzugeben, das eine Prüfung möglichst vieler Teile einer Nachrichtenstation ermöglicht.

Erfindungsgemäß wird die Aufgabe dadurch gelöst, daß im Prüfzustand das nachgebildete Signal mit der Nachricht verglichen wird und mit dem dabei gewonnenen Regelsignal das nachgebildete Signal automatisch derart eingestellt wird, daß mit dem Empfänger der eigenen Station die von der eigenen Station abgegebene Nachricht empfangen wird.

Das erfindungsgemäße Verfahren zeichnet sich dadurch aus, daß es die Prüfung aller wesentlichen Teile der Nachrichtenstation ermöglicht, insbesondere die Prüfung jener Teile, mit Hilfe der das nachgebildete Signal gewonnen und nachgeregelt wird. Das Verfahren zeichnet sich ferner dadurch aus, daß es mit einem praktisch vernachlässigbaren geringen technischen Aufwand realisierbar ist.

Falls mit dem Vergleichssignal die Differenz des nachgebildeten Signals und des empfangenen Signals signalisiert wird, dann ist es zweckmäßig, daß im Prüfzustand die Zufuhr des empfangenen Signals unterbunden wird, so daß das nachgebildete Signal dem Vergleichssignal gleicht. Auf diese Weise wird also auch die Funktion eines Vergleichers, mit dessen Hilfe das Vergleichssignal gewonnen wird, überprüft.

Um das Verfahren auf besonders rationelle Weise durchzuführen ist es zweckmäßig, daß eine Nachbildungsschaltungsanordnung vorgesehen ist, der die Nachricht zugeführt wird und die das nachgebildete Signal abgibt, daß ein Vergleicher vorgesehen ist, der im Betriebszustand in Abhängigkeit vom nachgebildeten Signal und in Abhängigkeit vom empfangenen Signal das Vergleichssignal erzeugt, daß ein Diskriminator vorgesehen ist, der über seinen Ausgang das Regelsignal abgibt, das die Differenz jener Signale signalisiert, die an seinem ersten Eingang bzw. an seinem zweiten Eingang anliegen, daß ein erster Schalter vorgesehen ist, der im Betriebszustand eine erste Schalterstellung einnimmt, bei der das konstante Referenzsignal dem ersten Eingang des Diskriminators zugeführt wird, und der im Prüfzustand eine zweite Schalterstellung einnimmt, bei der die Nachricht dem ersten Eingang des Diskriminators zugeführt wird, daß ein zweiter Schalter vorgesehen ist, der im Betriebszustand eine erste Schalterstellung einnimmt, über die das Vergleichssignal dem zweiten Eingang des Diskriminators zugeführt wird und der im Prüfzustand eine zweite Schalterstellung einnimmt, bei der das nachgebildete Signal dem zweiten Eingang des Diskriminators zugeführt wird.

Im folgenden werden Ausführungsbeispiele der Erfindung an Hand der Fig. 1 bis 10 erläutert, wobei in mehreren Figuren dargestellte gleiche Gegenstände mit gleichen Bezugszeichen bezeichnet sind. Es zeigt

Fig. 1 ein Blockschaltbild, an Hand dessen der Betriebszustand einer Nachrichtenstation erläutert wird,

Fig. 2 ein Blockschaltbild, an Hand dessen der Prüfzustand der Nachrichtenstation erläutert wird,

Fig. 3 und 4 mehrere Schaltungsanordnungen zur Realisierung des Verfahrens in prinzipeller Darstellung,

Fig. 5 und 6 mehrere Ausführungsbeispiele von Schaltungsanordnungen zur Realisierung des Verfahrens bei vorwiegend digitaler Verarbeitung der auftretenden Signale,

Fig. 7 und 8 mehrere Schaltungsanordnungen zur Realisierung des Verfahrens bei vorwiegend analoger Verarbeitung der Signale,

Fig. 9 und 10 besonders bewährte Ausführungsbeispiele zur Realisierung des Verfahrens.

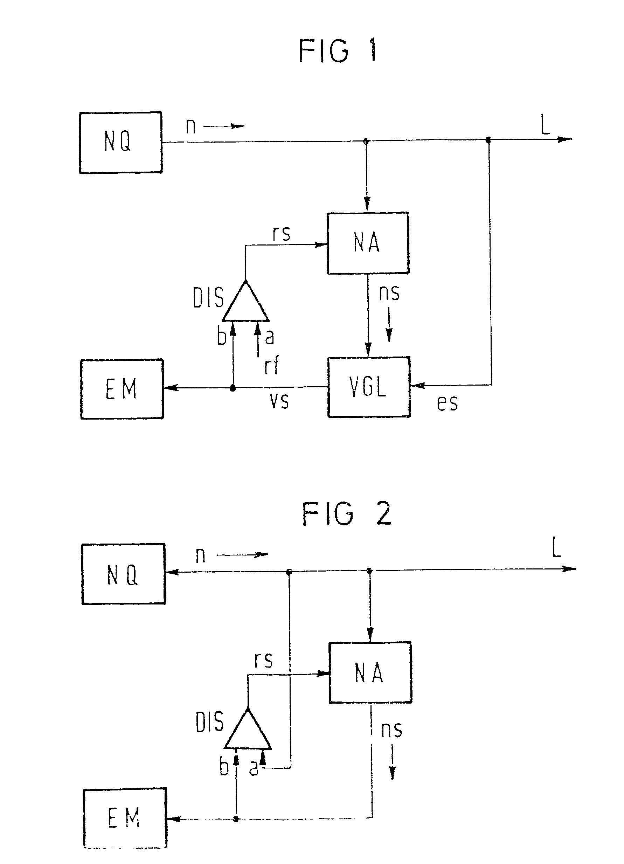

Fig. 1 zeigt den Betriebszustand einer Nachrichtenstation, die über die Zweidrahtleitung L im Duplexbetrieb mit einer anderen nicht dargestellten Nachrichtenstation verbunden ist. Die Nachrichtenquelle NQ gibt die zu übertragende Nachricht n ab. Mit Hilfe der Nachbildungsschaltungsanordnung NA wird das nachgebildete Signal ns gewonnen. Im Vergleicher VGL werden das nachgebildete Signal ns und das empfangene Signal es miteinander verglichen und es wird das Vergleichssignal vs gewonnen. Insbesondere kann mit Hilfe des Vergleichers VGL die Differenz des nachgebildeten Signals ns und des empfangenen Signals es gebildet werden. Mit Hilfe des Diskriminators DIS werden das Vergleichssignal vs und ein konstantes Referenzsignal rf miteinander verglichen und es wird ein Regelsignal rs abgeleitet, mit Hilfe dessen das nachgebildete Signal ns automatisch derart eingestellt wird, daß sich die gesendete Nachricht n nicht störend auswirkt im Empfänger EM der in Fig. 1 dargestellten Nachrichtenstation.

Die Nachricht n kann digital und insbesondere binär sein. Es kann sich aber auch um eine analoge Nachricht handeln, beispielsweise um ein Sprachsignal.

Fig. 2 zeigt den Prüfzustand der Nachrichtenstation. Im Prüfzustand wird somit das nachgebildete Signal ns an Stelle des in Fig. 1 eingezeichneten Vergleichssignals vs im Diskriminator DIS mit der Nachricht n verglichen. Mit dem dabei gewonnenen Regelsignal rs wird das nachgebildete Signal ns automatisch derart eingestellt, daß mit dem Empfänger EM der eigenen Station die von dieser eigenen Station gesendete Nachricht n empfangen wird. Wogegen bei dem in Fig. 1 dargestellten normalen Betriebszustand mit dem Empfänger EM die von einer anderen nicht dargestellten Station gesendete Nachricht empfangen wird, wird gemäß Fig. 2 während der Dauer des Prüfzustandes die Nachricht n von der eigenen Station empfangen.

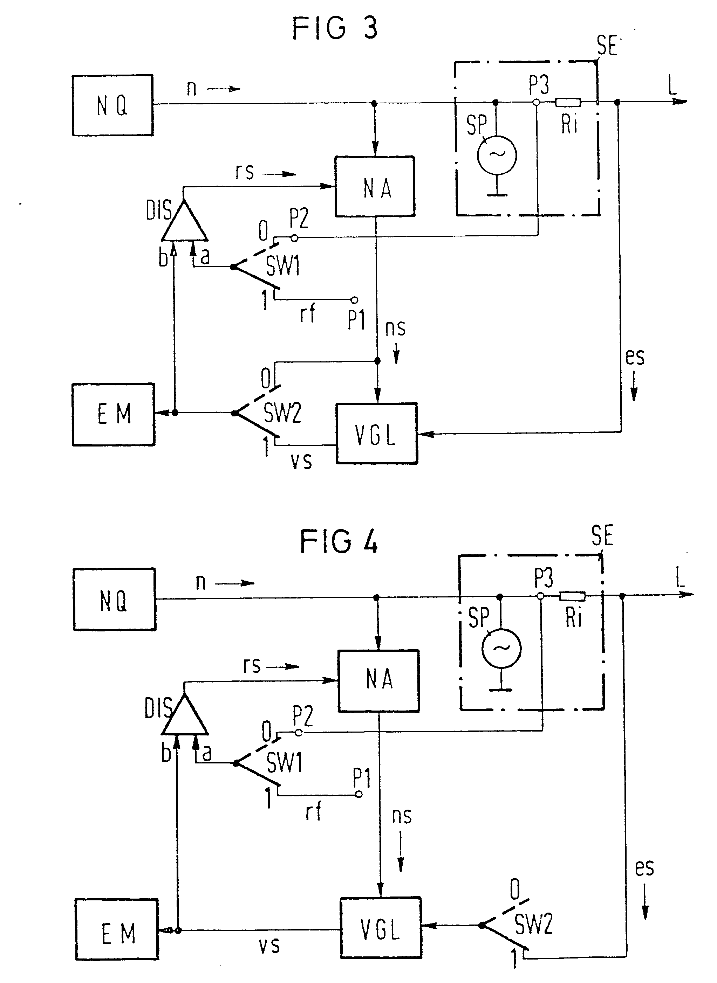

Die Fig. 3 und 4 zeigen Schaltungsanordnungen zur Realisierung des Prüfverfahrens in prinzipieller Darstellung. Der Sender SE besteht im Prinzip aus der Spannungsquelle SP und aus dem Innenwiderstand Ri. Mit Hilfe des Senders SE kann sowohl eine Verstärkung als auch eine Leitungsanpassung durchgeführt werden. Die Nachbildungsschaltungsanordnung NA kann grundsätzlich fallweise entweder ein digitales oder ein analoges nachgebildetes Signal ns abgeben. Das Regelsignal rs ist im allgemeinen digital, falls die Nachbildungsschaltungsanordnung NA ebenfalls digital arbeitet. Falls die Nachbildungsschaltungsanordnung NA analog arbeitet, kann das Regelsignal rs entweder analog oder digital sein. Mit Hilfe des Diskriminators DIS wird die Differenz jener Signale ermittelt, die an den Eingängen a und b anliegen. Als Vergleicher VGL ist im allgemeinen ein Summierer vorgesehen, mit Hilfe dessen die Differenz des nachgebildeten Signals ns und des empfangenen Signals es ermittelt wird. Bei ordnungsgemäßem Betrieb soll die Summe des nachgebildeten Signals ns und des empfangenen Signals es datensignalmäßig gleich null sein. Wenn dies der Fall ist, dann wirkt sich die gesendete Nachricht n nicht störend aus im Empfänger EM der eigenen in Fig. 3 dargestellten Nachrichtenstation.

Die beiden Schalter SW 1 und SW 2 nehmen während der Dauer des normalen Betriebszustandes die voll eingezeichneten Schalterstellungen ein, die mit dem Bezugszeichen 1 bezeichnet sind. Während der Dauer des Prüfzustandes werden die beiden Schalter in ihre zweiten gestrichelt dargestellten und mit dem Bezugszeichen 0 bezeichneten Schalterstellungen gebracht. Während der Dauer des Betriebszustandes wird dem Eingang a des Diskriminator DIS über den Schaltungspunkt P 1 ein konstantes Referenzsignal rf zugeführt. Der Eingang b des Diskriminators erhält das Vergleichssignal vs. Das Regelsignal rs signalisiert die Differenz der dem Diskriminator eingangs zugeführten Signale und stellt die Nachbildungsschaltungsanordnung NA automatisch derart ein, daß sich das günstigste nachgebildete Signal ns ergibt. Dieses nachgebildete Signal ns ist während der Dauer des Betriebszustandes jedoch nur im Vergleicher VGL wirksam.

Im Prüfzustand wird dem Eingang a des Diskriminators DIS über die Schaltungspunkte P 3, P 2 und über den Schalter SW 1 die Nachricht n zugeführt. Der Eingang b des Diskriminators erhält über den Schalter SW 2 das nachgebildete Signal ns. Mit Hilfe des Diskriminators DIS wird nun die Differenz des Nachrichtensignals n und des nachgebildeten Signals ns ermittelt und das entsprechende Regelsignal rs wird der Nachbildungsschaltungsanordnung NA zugeführt. Falls die Nachrichtenquelle NQ, der Sender SE, die Nachbildungsschaltungsanordnung NA, der Diskriminator DIS, der Empfänger EM und die zugehörigen Verbindungsleitungen in Ordnung sind, dann wird während des Prüfzustandes im Empfänger EM die Nachricht n empfangen. Der Empfänger EM wird somit zusätzlich zu seiner sonstigen Funktion während des Prüfzustandes zur Prüfung der Nachrichtenstation herangezogen.

Im Fall der Fig. 3 ist der Schaltungspunkt P 2 mit dem Verbindungspunkt P 3 der Spannungsquelle SP und des Innenwiderstandes Ri verbunden. Bei praktisch ausgeführten Schaltungsanordnungen können zwischen der Nachrichtenquelle NQ und dem Punkt P 3 weitere in Fig. 3 nicht dargestellte Netzwerke angeordnet sein. Grundsätzlich wäre es denkbar, den Punkt P 2 an irgendeinen anderen Punkt anzuschließen, der zwischen der Nachrichtenquelle NQ und dem Verbindungspunkt P 3 gelegen ist. Die dargestellte Verbindung der beiden Punkte P 2 und P 3 hat aber den Vorteil, daß dabei auch die Funktion des Senders SE mit überprüft wird.

Die in Fig. 4 dargestellte Schaltungsanordnung unterscheidet sich von der in Fig. 3 dargestellten Schaltungsanordnung lediglich durch die etwas andere Anordnung des Schalters SW 2. Dabei wird vorausgesetzt, daß als Vergleicher VGL ein Summierer vorgesehen ist, mit Hilfe dessen die Differenz der eingangs zugeführten Signale ns und es ermittelt wird. Wenn im Prüfzustand der in Fig. 4 dargestellte Schalter SW 2 seine gestrichelt dargestellte Schalterstellung einnimmt, dann wird die Zufuhr des Empfangssignals es zum Vergleicher VGL unterbunden. Ohne Zufuhr des empfangenen Signals es gleicht aber das Vergleichssignal vs dem eingangs zugeführten, nachgebildeten Signal ns. Im Prüfzustand wird somit gemäß Fig. 3 beschrieben, das nachgebildete Signal ns dem Eingang b des Diskriminators DIS zugeführt. Die in Fig. 4 dargestellte Schaltungsanordnung zeichnet sich dadurch aus, daß auch die Funktion des Vergleichers VGL überprüft wird, zusätzlich zu den Funktionen der übrigen Teile der Nachrichtenstation.

Falls als Vergleicher ein Summierer vorgesehen ist, dann kann dieser entweder eine Addition oder eine Subtraktion der beiden eingangs zugeführten Signale ns bzw. es bewirken. In Abhängigkeit von der Polarität dieser Signale soll jedoch in jedem Fall die Differenz der beiden Signale ermittelt werden. Die in den Fig. 3 und 4 dargestellten Empfänger EM können entweder digital oder analog arbeiten, je nach dem, ob ihnen Digital- oder Analogsignale zugeführt werden.

Die Schalter SW 1 und SW 2 können mit Hilfe von Relais, mit Hilfe von Drucktasten oder mit Hilfe von Halbleiterschaltern, insbesondere mit Hilfe von FET-Halbleiterbauteilen realisiert werden. Im allgemeinen ist es zweckmäßig, diese beiden Schalter gekoppelt zu betreiben, so daß sie wie ein Doppelschalter wirken und bei Betätigung entweder beide die voll eingezeichnete Schalterstellung oder beide die gestrichelt dargestellte Schalterstellung annehmen.

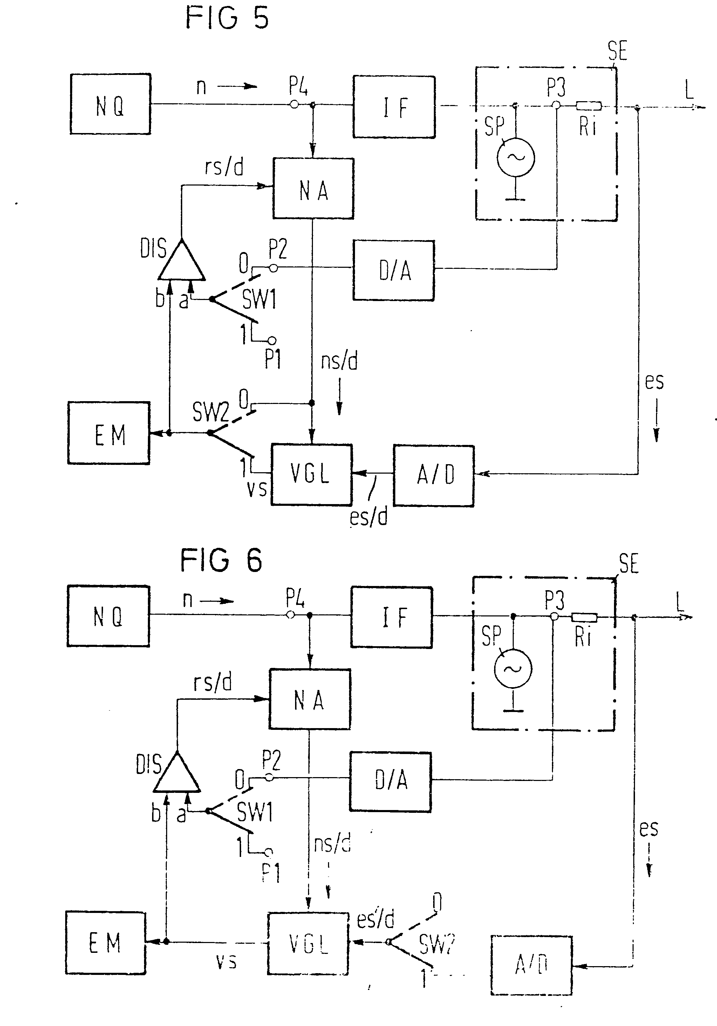

Die Fig. 5 und 6 zeigen Blockschaltbilder von Nachrichtenstationen, deren Bauteile vorwiegend digital arbeiten. Es ist also anzunehmen, daß die Nachrichtenquelle NQ ein digitales Signal abgibt, an eine digital arbeitende Nachbildungsschaltungsanordnung NA. Diese Nachbildungsschaltungsanordnung gibt ein digitales nachgebildetes Signal ns/d ab und wird mit einem digitalen Regelsignal rs/d geregelt. Der Diskriminator DIS und der Empfänger EM erhalten eingangs ebenfalls digitale Signale.

Mit Hilfe des Impulsformers IF wird aus der Nachricht n ein Analogsignal abgeleitet. Um im Schaltungspunkt P 2 ein Digitalsignal zur Verfügung zu haben ist daher der Digital/Analog-Wandler D/A erforderlich. In diesem Fall wäre es einfacher, die leitende Verbindung der Punkte P 2 und P 3 über den Digital/Analog-Wandler zu unterbrechen und die Punkte P 2 und P 4 direkt miteinander leitend zu verbinden. Da es sich beim empfangenen Signal es aber um ein Analogsignal handelt, ist der Analog/Digital-Wandler A/D erforderlich, um das digitale, empfangene Signal es/d zu erzeugen.

Die in Fig. 6 dargestellte Schaltungsanordnung unterscheidet sich von der Fig. 5 dargestellten nur durch die verschiedene Anordnung der Schalter SW 2.

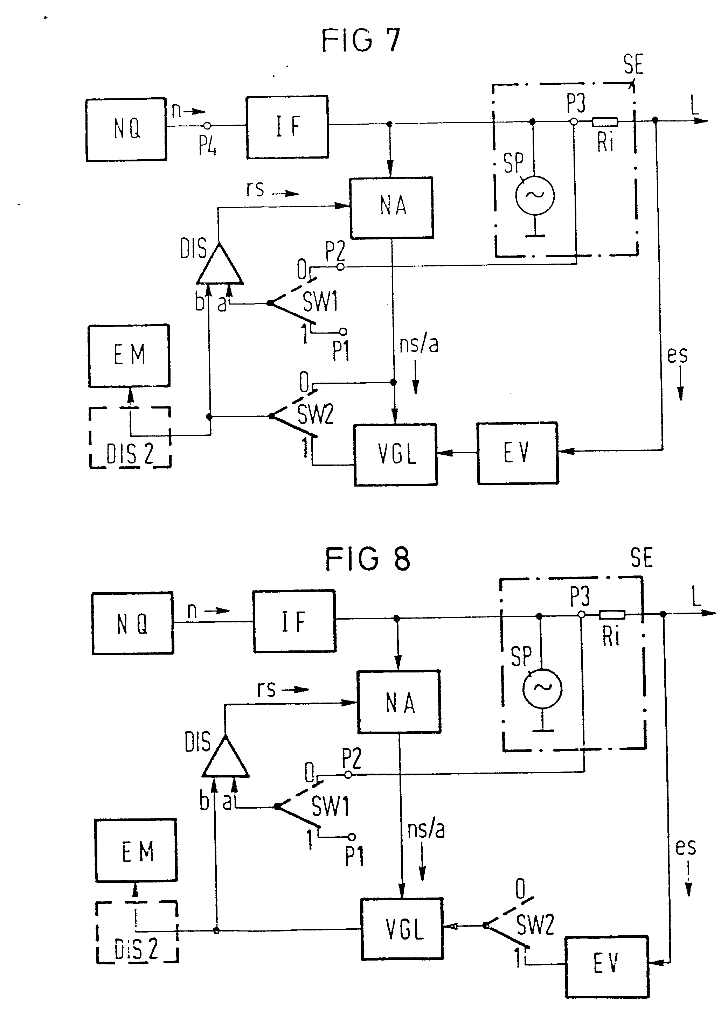

Die Fig. 7 und 8 beziehen sich auf Schaltungsanordnungen, die vorwiegend analog arbeiten. Es wird wieder eine digitale Nachricht n vorausgesetzt, die jedoch mit Hilfe des Impulsformers IF in ein Analogsignal umgewandelt wird. Die Nachbildungsschaltungsanordnung NA arbeitet analog und gibt das analoge nachgebildete Signal ns/a ab. Das empfangene Signal es wird dem Empfangsverstärker EV zugeführt, über dessen Ausgang wieder ein Analogsignal abgegeben wird. An den beiden Eingängen des Vergleichers VGL liegen somit zwei Analogsignale an und es wird ein analog arbeitender Vergleicher VGL vorausgesetzt. Auch dem Empfänger EM und dem Diskriminator DIS werden Analogsignale zugeführt. Das vom Diskriminator abgegebene Regelsignal rs könnte grundsätzlich entweder ein Digitalsignal oder aber ein Analogsignal sein. Es wäre denkbar, daß zwischen dem Vergleicher VGL und dem Empfänger EM ein weiterer Diskriminator DIS 2 eingeschaltet ist, der auf zwei oder mehrere Schwellwerte anspricht, wogegen der Diskriminator DIS nur auf einen einzigen Schwellwert anspricht.

Die Fig. 7 und 8 unterscheiden sich nur durch die verschiedene Anordnung der Schalter SW 2.

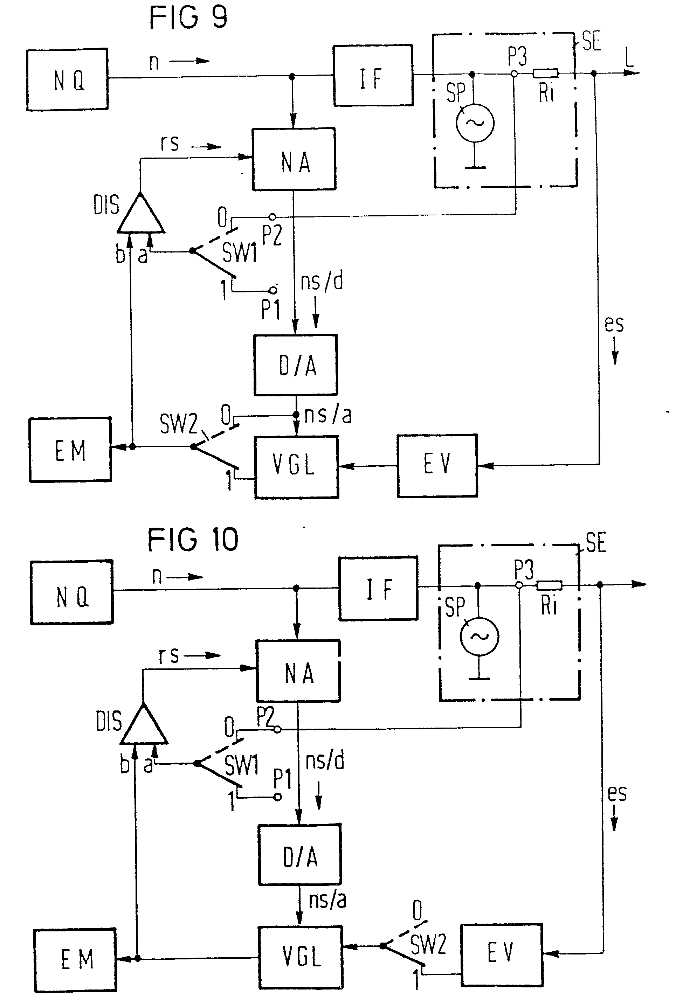

Die Fig. 9 und 10 zeigen Blockschaltbilder von Nachrichtenstationen, deren Bauteile teils digital und teils analog arbeiten. Diese beiden Schaltungsanordnungen zeichnen sich durch besonders geringen technischen Aufwand aus. Es wird wieder eine digitale Nachricht n vorausgesetzt und eine digital arbeitende Nachbildungsschaltungsanordnung NA. Das digitale nachgebildete Signal ns/d wird mit Hilfe des Digital/Analog-Wandlers D/A in ein analoges nachgebildetes Signal ns/a umgewandelt. Da es sich beim empfangenen Signal es wieder um ein Analogsignal handelt und auch über den Ausgang des Empfangsverstärkers ev ein Analogsignal abgegeben wird, werden im Vergleicher VGL zwei Analogsignale mit einander verglichen und es wird ein analoges Vergleichssignal an den Eingang b des Diskriminators DIS abgegeben. Dem Eingang a des Diskriminators wird während des Prüfzustandes ebenfalls ein analoges Signal zugeführt, aber über den Ausgang des Diskriminators DIS wird nunmehr ein digitales Regelsignal rs abgegeben. Ähnlich wie im Fall der Fig. 7 kann zwischen dem Vergleicher VGL und dem Empfänger EM ein weiterer Diskriminator dazwischengeschaltet sein. Die Schaltungen gemäß den Fig. 9 und 10 unterschiedliche Anordnung der Schalter SW 2.

## Patentansprüche

1. Verfahren zur Prüfung einer Nachrichtenstation, die wahlweise in einen Prüfzustand oder in einen Betriebszustand versetzbar ist, wonach im Betriebszustand (Fig. 1) eine Nachricht (n) im Duplex-Betrieb über eine Zweidraht-Leitung (L) einer anderen Nachrichtenstation zugeleitet wird, wonach ein nachgebildetes Signal (ns) gewonnen, mit dem empfangenen Signal (es) verglichen und so ein Vergleichssignal (vs) gewonnen und dem Empfänger (EM) zugeführt wird, und wonach das Vergleichssignal (vs) mit einem konstanten Referenzsignal (rf) verglichen und so ein Regelsignal (rs) gewonnen wird, mit dessen Hilfe das nachgebildete Signal (ns) automatisch derart eingestellt wird, daß sich die gesendete Nachricht (n) nicht störend auswirkt im Empfänger (EM) der eigenen Nachrichtenstation (Fig. 1), dadurch gekennzeichnet, daß im Prüfzustand (Fig. 2) das nachgebildete Signal (ns) mit der Nachricht (n) verglichen wird und mit dem dabei gewonnenen Regelsignal (rs) das nachgebildete Signal (ns) automatisch derart eingestellt wird, daß mit dem Empfänger (EM) der eigenen Station die von der eigenen Station abgegebene Nachricht (n) empfangen wird.

2. Verfahren nach Anspruch 1, dadurch gekennzeichnet, daß im Betriebszustand die Differenz des nachgebildeten Signals (ns) und des empfangenen Signals (es) ermittelt und mit Hilfe des Vergleichssignals (vs) signalisiert wird und daß im Prüfzustand die Zufuhr des empfangenen Signals (es) unterbunden wird, so daß das nachgebildete Signal (ns) dem Vergleichssignal (vs) gleicht (Fig. 4, 6, 8, 10).

3. Schaltungsanordnung zur Durchführung des Verfahrens nach Anspruch 1, dadurch gekennzeichnet, daß eine Nachbildungsschaltungsanordnung (NA) vorgesehen ist, der die Nachricht (n) zugeführt wird und die das nachgebildete Signal (ns) abgibt, daß ein Vergleicher (VGL) vorgesehen ist, der im Betriebszustand in Abhängigkeit vom nachgebildeten Signal (ns) und in Abhängigkeit vom empfangenen Signal (es) das Vergleichssignal (vs) erzeugt, daß ein Diskriminator (DIS) vorgesehen ist, der über seinen Ausgang das Regelsignal (rs) abgibt, das die Differenz jener Signale signalisiert, die an seinem ersten Eingang (a) bzw. an seinem zweiten Eingang (b) anliegen, daß ein erster Schalter (SW 1) vorgesehen ist, der im Betriebszustand eine erste Schalterstellung (1) einnimmt, bei der das konstante Referenzsignal (rf) dem ersten Eingang (a) des Diskriminators (DIS) zugeführt wird, und der im Prüfzustand eine zweite Schalterstellung (0) einnimmt, bei der die Nachricht (n) dem ersten Eingang (a) des Diskriminators (DIS) zugeführt wird, daß ein zweiter Schalter (SW 2) vorgesehen ist, der im Betriebszustand eine erste Schalterstellung (1) einnimmt, über die das Vergleichssignal dem zweiten Eingang (b) des Diskriminators (DIS) zugeführt wird, und der im Prüfzustand eine zweite Schalterstellung (0) einnimmt, bei der das nachgebildete Signal (ns) dem zweiten Eingang (b) des Diskriminators (DIS) zugeführt wird (Fig. 3 bis 10).

4. Schaltungsanordnung nach Anspruch 3, dadurch gekennzeichnet, daß bei der ersten Schalterstellung des zweiten Schalters (SW 2) der zweite Eingang (b) des Diskriminators (DIS) mit dem Ausgang des Vergleichers (VGL) verbunden ist und daß bei der zweiten Schalterstellung des zweiten Schalters (SW 2) der zweite Eingang (b) des Diskriminators (DIS) mit dem Ausgang der Nachbildungsschaltungsanordnung (NA) verbunden ist (Fig. 3, 5, 7, 9).

5. Schaltungsanordnung nach Anspruch 3, dadurch gekennzeichnet, daß bei der ersten Schalterstellung des zweiten Schalters (SW 2) das empfangene Signal (es) dem Vergleicher (VGL) zugeführt wird und daß bei der zweiten Schalterstellung des zweiten Schalters (SW 2) die Zufuhr des empfangenen Signals (es) zum Vergleicher unterbunden ist (Fig. 4, 6, 8, 10).

6. Schaltungsanordnung nach Anspruch 3, dadurch gekennzeichnet, daß die Nachricht (n) über einen Sender (SE) der Zweidraht-Leitung (L) zugeführt wird und der Sender (SE) durch eine Serienkombination einer Spannungsquelle (SP) mit einem Innenwiderstand (Ri) gegeben ist und daß im Prüfzustand die Übertragungsstrecke zwischen der Nachrichtenquelle (NQ) und dem Verbindungspunkt (P 3) der Spannungsquelle (SP) mit dem Innenwiderstand (Ri) über den ersten Schalter (SW 1) in seiner zweiten Schalterstellung (0) an den ersten Eingang (a) des Diskriminators (DIS) angeschlossen ist.

## Claims

1. Method for testing a communications station which can be selectively set in a test state or in an operating state, in accordance with which, in the operating state (Fig. 1), an item of communication (n) is conducted in duplex operation via a two-wire line (L) to another communications station, whereupon a simulated signal (ns) is obtained and compared with the received signal (es) and in this way a comparison signal (vs) is obtained and conducted to the receiver (EM), and in accordance with which the comparison signal (vs) is compared with a constant reference signal (rf) and in this way a regulating signal (rs) is obtained with the aid of which the simulated signal (ns) is automatically adjusted in such a way that the transmitted item of communication (n) does not exert a disturbing influence in the receiver (EM) of the particular communications station (Fig. 1), characterised in that in the test state (Fig. 2) the simulated signal (ns) is compared with the item of communication (n) and with the aid of the regulating signal (rs) obtained in this way the simulated signal (ns) is automatically adjusted in such a way that the item of communication (n) emitted from the particular station is received by the receiver (EM) of that station.

2. Method as claimed in claim 1 characterised in that in the operating state the difference between the simulated signal (ns) and the received signal (es) is determined and is signalled by means of the comparison signal (vs), and that in the test state the supply of the received signal (es) is suppressed so that the simulated signal (ns) is identical to the comparison signal (vs) (Fig. 6, 8, 10).

3. Circuit arrangement for the implementation of the process claimed in claim 1, characterised in that a simulation circuit arrangement (NA) is provided which is supplied with the item of communication (n) and emits the simulated signal (ns), that a comparator (VGL) is provided which, in the operating state, produces the comparison signal (vs) in dependence upon the simulated signal (ns) and in dependence upon the received signal (es), that a discriminator (DIS) is provided which from its output emits the regulating signal (rs) which signals the difference between those signals which are present at its first input (a) and at its second input (b), that a first switch (SW 1) is provided which, in the operating state, assumes a first switching position (1) in which the constant reference signal (rf) is fed to the first input (a) of the discriminator (DIS) and which, in the test state, assumes a second switching position (0) in which the item of communication (n) is fed to the first input (a) of the discriminator (DIS), that a second switch (SW 2) is provided which, in the operating state, assumes a first switching position (1) via which the comparison signal is fed to the second input (b) of the discriminator (DIS) and which, in the test state, assumes a second switching position (0) in which the simulated signal (ns) is fed to the second input (b) of the discriminator (DIS) (Figs. 3 and 4).

4. Circuit arrangement as claimed in claim 3, characterised in that when the second switch (SW 2) is in the first switching position the second input (b) of the discriminator (DIS) is connected to the output of the comparator (VGL), and that when the second switch (SW 2) is in the second switching position the second input (b) of the discriminator (DIS) is connected to the output of the simulation circuit arrangement (NA) (Fig. 3).

5. Circuit arrangement as claimed in claim 3, characterised in that when the second switch (SW 2) is in the first switching position the received signal (es) is fed to the comparator (VGL), and that when the second switch (SW 2) is in the second switching position the the supply of the received signal (es) to the comparator is discontinued (Fig. 4).

6. Circuit arrangement as claimed in claim 3, characterised in that the item of communication (n) is conducted via a transmitter (SE) to the two-wire line (L) and the transmitter (SE) is formed by a series combination of a voltage source (SP) and an internal impedance (Ri), and that in the test state the transmission link between the communications source (NQ) and the point of connection (P 3) of the voltage source (SP) and the internal impedance (Ri) is connected via the first switch (SW 1) in its second switch position (0) to the first input (a) of the discriminator (DIS) (Figs. 3 to 10).

**Revendications**

1. Procédé pour l'essai d'un appareil de télécommunications susceptible d'être mis au choix à à l'état d'essai ou à l'état de fonctionnement, du type dans lequel dans l'état de fonctionnement (figure 1) une communication ou information (n) est transmise à un autre appareil, en service duplex et par l'intermédiaire d'un conducteur bifilaire (L), et dans lequel on obtient un signal simulé (ns) que l'on compare avec le signal reçu (es) pour obtenir un signal de comparaison à transmettre à l'appareil récepteur, ledit signal de comparaison (vs) étant comparé avec un signal de référence constant (nf) en vue d'obtenir un signal de régulation (rs) à l'aide duquel le signal simulé (ns) est ajusté automatiquement de telle manière que la communication émise (n) n'a pas d'effet gênant dans le récepteur (EM) de l'appareil de télécommunications qui lui est propre (figure 1), caractérisé par le fait que dans l'état d'essai (figure 2) le signal simulé (ns) est comparé avec la communication (n) et qu'avec le signal de régulation (rs) ainsi obtenu, le signal simulé (n) est automatiquement ajusté de telle sorte qu'avec le récepteur (EM) de l'appareil qui lui est propre, la communication (n) émise par l'appareil qui lui est propre est reçue.

2. Procédé selon la revendication I, caractérisé par le fait qu'à l'état de fonctionnement la différence entre le signal simulé (ns) et le signal reçu (es) est déterminée et est signalée à l'aide du signal de comparaison (vs) et qu'à l'état d'essai, la transmission du signal reçu (es) est interdite, en sorte que le signal simulé (ns) est identique au signal de comparaison (vs) (figures 6, 8, 10).

3. Montage pour la mise en oeuvre du procédé selon la revendication 1, caractérisé par le fait qu'il est prévu un circuit de simulation (NA) auquel est appliquée la communication (n) et qui fournit le signal simulé (ns), un comparateur (VGL) qui, à l'état de service et en fonction du signal simulé (ns) de même qu'en fonction du signal reçu (es), fournit le signal de comparaison (vs), un discriminateur (DIS) qui émet, par sa sortie, le signal de régulation (rs) qui la différence des signaux qui sont appliqués à première entrée (a) et à sa seconde entrée (b), un premier commutateur (SW1) qui occupe, à à l'état de fonctionnement, une première position de commutation (1) pour laquelle le signal de référence constant (rf) est appliqué à la première entrée (a) du discriminateur (DIS) alors qu'il occupe, à l'état d'essai, une seconde position de commutation (0) pour laquelle la communication (n) est appliquée à la première entrée (a) du discriminateur (DIS), un second commutateur (SW 2) qui, à l'état de fonctionnement, occupe une première position de commutation (1) par l'intermédiaire de laquelle le signal de comparaison est appliqué à la seconde entrée (b) du discriminateur (DIS) alors qu'il occupe, à l'état d'essai, une seconde position de commutation (0) dans laquelle le signal simulé (ns) est appliqué à la seconde entrée (b) du discriminateur (DIS) (figures 3 et 4).

4. Montage selon la revendication 3, caractérisé par le fait qu'au niveau de la première position de commutation du second commutateur (SW 2), la seconde entrée (b) du discriminateur (DIS) est reliée la sortie du comparateur (VGL) et qu'au niveau de la seconde position de commutation du second commutateur (SW 2) la seconde entrée (b) du discriminateur (DIS) est reliée à la sortie du circuit de simulation (figure 3).

5. Montage selon la revendication 3, caractérisé par le fait qu'au niveau de la première position de commutation du second commutateur (SW 2) le signal reçu (es) est appliqué au comparateur (VGL) et qu'au niveau de la seconde position de commutation du second commutateur (SW 2) l'application du signal reçu (es) au comparateur est interdite (figure 4).

6. Montage selon la revendication 3, caractérié par le fait que la communication (n) est transmise par un émetteur (SE) à un conducteur bifilaire (L) et que ledit émetteur est constitué par une source de tension (SP) et par une résistance interne (Ri) et qu'à l'état d'essai la voie de transmission entre la source de communication (NQ) et le point de liaison de la source de tension (SP) avec la résistance interne (Ri) est reliée à la première entrée (a) du discriminateur (DIS), par l'intermédiaire du premier commutateur (SW 1) qui assume sa seconde position de commutation (0) (figures 3 à 10).

# FIG 1

NQ  n →

L

rs

NA

DIS

ns

b  a

rf

EM

vs

VGL

es

# FIG 2

NQ  n →

L

rs

NA

DIS

ns

b  a

EM

## FIG 3

## FIG 4

## FIG 5

## FIG 6

## FIG 7

## FIG 8

## FIG 9

## FIG 10